(19) Europäisches Patentamt
European Patent Office
Office européen des brevets

(11) **EP 0 915 119 A1**

(12) **EUROPÄISCHE PATENTANMELDUNG**

(43) Veröffentlichungstag:
**12.05.1999 Patentblatt 1999/19**

(51) Int. Cl.⁶: $C08G\ 77/26$, $C08G\ 77/388$, $C08L\ 83/08$, $C09G\ 1/08$

(21) Anmeldenummer: **98115654.0**

(22) Anmeldetag: **20.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.11.1997 DE 19749380**

(71) Anmelder: **Wacker-Chemie GmbH**
**81737 München (DE)**

(72) Erfinder:
• **Mahr, Günter, Dr.**
**84489 Burghausen (DE)**
• **Wimmer, Franz X.**
**84489 Burghausen (DE)**
• **Winterfeld, Jörn, Dr.**
**84489 Burghausen (DE)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Aminosiloxanhaltige Zusammensetzungen**

(57)   Die Erfindung betrifft bei Raumtemperatur feste, Aminogruppen aufweisende Organopolysiloxane, die aufgrund von Temperaturänderungen reversibel ihre Aggregatszustände ändern können.

EP 0 915 119 A1

Printed by Xerox (UK) Business Services
2.16.7/3.6

**Beschreibung**

Die Erfindung betrifft bei Raumtemperatur feste, Aminogruppen aufweisende Organopolysiloxane, Zusammensetzungen, die diese enthalten, Verfahren zu ihrer Herstellung und ein Verfahren zur Behandlung von Oberflächen.

Die Verwendung von Organopolysiloxanen in Reinigungszusammensetzungen, wie z.B. Lösungen zum Waschen von Fensterscheiben, Autopolituren, Glaskeramikpflegemitteln, Metall- und Textilreinigern, ist bekannt. In den Veröffentlichungen GB-PS 1172479, US-PS 3681122 und US-PS 4124523 werden im wesentlichen Reinigungsmittel beschrieben, die aus einem Organopolysiloxan, einem Alkalisalz der 3. bis 5. Hauptgruppe, einem Scheuermittel und Wasser sowie gegebenenfalls einem Verdikkungsmittel und einem nichtionischem Tensid bestehen. Diese Formulierungen sind zwar grundsätzlich zur Reinigung von Oberflächen geeignet, jedoch ist die schützende, pflegende und hydrophobierende Wirkung völlig unzureichend. In EP 0548789A1 werden Pflegemittel für harte Oberflächen beschrieben, die im wesentlichen kein organisches Lösungsmittel enthalten und unter Verwendung von bei Raumtemperatur festen Organopolysiloxanen hergestellt werden. Die Pflegemittel zeichnen sich durch eine hohe Witterungs- und Waschbeständigkeit aus, weisen jedoch eine unzureichende Farbsättigung und Glanztiefe auf. In US-PS 4699988 sind wachsartige Silane und Siloxane mit Aminfunktionen beschrieben. Die langkettigen Alkylreste sind über eine Si-O-C-Bindung an das Siloxan gebunden, die - wie dem Fachmann bekannt- besonders bei Abweichung von einem pH-Wert von sieben nicht hydrolysestabil ist, was nicht erwünscht ist.

In DE-OS 3321289 ist eine Wasser-in-Öl-Emulsion zur Reinigung von Glaskeramikoberflächen beschrieben, die aus einem flüssigen aminofunktionellen Organopolysiloxan, einem cyclischen Dimethylpolysiloxan, einem Polysiloxan-polyoxyalkylenBlockcopolymer, einem Scheuerpulver, einem Tensid und Wasser besteht. Die reinigende Wirkung dieser Formulierung ist zwar ebenfalls vorhanden, jedoch ist die Schutzwirkung des enthaltenen flüssigen aminofunktionellen Organopolysiloxans als Schutzfilmbildner, insbesondere gegenüber angebrannten, stark zuckerhaltigen Speiseresten nicht zufriedenstellend. In DE-PS 2952756 werden Zusammensetzungen beschrieben, die ein metalloxid- und / oder aminogruppenhaltiges Polysiloxan, ein Putz- und Reinigungsmittel und zusätzliche Tenside beinhalten. Die betreffenden Pflegemittel besitzen zwar eine reinigende und konditionierende Wirkung, zeigen jedoch eine geringe Lagerstabilität infolge eines kontinuierlichen Viskositätsanstiegs, eine schlechte Auspolierbarkeit und eine ungenügende Schutzwirkung gegenüber angebrannten, stark zuckerhaltigen Speisen. In DE-OS 3327926 wird eine Emulsionsformulierung dargelegt, die sich aus einem flüssigen aminofunktionellen Polydimethylsiloxan, Emulgatoren, sauren Bestandteilen, einem Lösungsmittel, einem Scheuermittel, Schutzfilmverbesserern und Wasser zusammensetzt. Die betreffenden Pflegemittel leisten zwar eine reinigende und konditionierende Wirkung, weisen jedoch dieselben Nachteile auf wie für DE-PS 2952756 beschrieben.

Es bestand daher die Aufgabe, Zusammensetzungen auf Basis von Organopolysiloxanen bereitzustellen, die die Nachteile des Standes der Technik überwinden und insbesondere eine sehr gute, langzeitbeständige Schutz- und Pflegewirkung, eine sehr gute, langzeitbeständige Hydrophobierung sowie gleichzeitig eine ausgezeichnete Farbsättigung und Glanztiefe zeigen.

Die Aufgabe wurde durch die nachstehend beschriebene Erfindung gelöst.

Ein Gegenstand der vorliegenden Erfindung sind bei Raumtemperatur feste, Aminogruppen aufweisende Organopolysiloxane, die aufgrund von Temperaturänderungen reversibel ihre Aggregatszustände ändern können.

Die reversible Änderung des Aggregatzustands bedeutet bei der Erfindung, daß sich der feste Aggregatszustand in den flüssigen Aggregatszustand reversibel ändert und umgekehrt.

Als Raumtemperatur soll im Folgenden eine Temperatur von 20 °C verstanden werden.

Bei den bei Raumtemperatur festen, Aminogruppen aufweisenden Organopolysiloxanen handelt es sich bevorzugt um solche mit Siloxaneinheiten der allgemeinen Formel I

$$R^1{}_a R^2{}_b R^3{}_c SiO_{(4-a-b-c)/2} \tag{I},$$

wobei

$R^1$ gleich oder verschieden sein kann und vorzugsweise einwertige unsubstituierte oder Fluor-, Chlor- oder Brom-substituierte Kohlenwasserstoffreste mit Vorzugsweise 1 bis 12 Kohlenstoffatomen, Alkoxyreste mit vorzugsweise 1 bis 12 Kohlenstoffatomen, Hydroxyreste oder Halogenreste bedeutet,

$R^2$ gleich oder verschieden sein kann und Vorzugsweise einwertige unsubstituierte Kohlenwasserstoffreste mit Vorzugsweise 1 bis 40 Kohlenstoffatomen bedeutet,

$R^3$ gleich oder verschieden sein kann und vorzugsweise Aminogruppen enthaltende Kohlenwasserstoffreste bedeutet,

a 0,1, 2 oder 3,

b 0, 1 oder 2,

c 0, 1 oder 2 ist,

mit der Maßgabe, daß die Summe aus a + b + c kleiner oder gleich 3 ist und im gesamten Molekül zumindest eine Einheit vorhanden ist, die einen Aminogruppen enthaltenden Kohlenwasserstoffrest aufweist.

Bevorzugt sind bei Raumtemperatur feste, Aminogruppen aufweisende, lineare oder cyclische Organopolysiloxane oder ihre beliebigen Gemische, die die Formeln II

$$R^1{}_dR^2{}_eR^3{}_fSiO(SiR^1R^2O)_x[(SiR^1R^3O)_r(SiR^1{}_2O)_s]_ySiR^1{}_dR^2{}_eR^3{}_f \qquad (II)$$

und III

$$[(SiR^1R^4O)]_z \qquad (III)$$

aufweisen,
wobei

$R^1$, $R^2$ und $R^3$ die oben angegebene Bedeutung haben,

$R^4$ gleich oder verschieden sein kann und $R^1$, $R^2$ oder $R^3$ bedeutet,

d 1, 2 oder 3,

e 0, 1 oder 2,

f 0, 1 oder 2 ist,

r eine ganze Zahl im Wert von 0 bis 150, bevorzugt im Wert von 0 bis 100, besonders bevorzugt im Wert von 0 bis 50 ist,

s eine ganze Zahl im Wert von 0 bis 200, bevorzugt im Wert von 0 bis 150, besonders bevorzugt im Wert von 0 bis 100 ist,

x eine ganze Zahl im Wert von 0 bis 300, bevorzugt im Wert von 0 bis 200, besonders bevorzugt im Wert von 0 bis 100 ist,

y eine ganze Zahl im Wert von 0 bis 200, bevorzugt im Wert von 0 bis 150, besonders bevorzugt im Wert von 0 bis 100 ist,

die Summe aus x + y 0 bis 500, bevorzugt 350 und besonders bevorzugt 200 beträgt, wobei die Einheiten $(SiR^1R^3O)_r$ und $(SiR^1{}_2O)_s$ in beliebiger Reihenfolge auftreten können,

z eine ganze Zahl im Wert von vorzugsweise 3 bis 30, bevorzugt 3 bis 20, besonders bevorzugt 3 bis 12 ist, vorzugsweise mit der Maßgabe, daß mindestens ein Rest $R^2$ in Formel II die Bedeutung von Kohlenwasserstoffrest mit mindestens 14 Kohlenstoffatomen hat und mindestens ein Rest $R^3$ in Formel II vorhanden ist, und vorzugsweise mit der Maßgabe, daß mindestens der Rest $R^4$ in Formel III gleichzeitig einmal die Bedeutung von $R^2$ und einmal die Bedeutung von $R^3$ hat.

Bei dem Rest $R^1$ handelt es sich bevorzugt um $C_1$- bis $C_{12}$-Kohlenwasserstoffreste, $C_1$- bis $C_{12}$-Alkoxyreste, Halogenreste und Hydroxyreste.

Beispiele für Reste $R^1$ sind vorzugsweise Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Oktylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β-Phenylethylrest; und Halogenreste wie der Chlor-, Fluor-, Brom- und Iodrest.

Die Alkoxyreste $R^1$ sind über ein Sauerstoffatom gebundene, vorstehend beschriebene Alkylreste. Die Beispiele für Alkylreste gelten in vollem Umfang auch für die Alkoxyreste.

Besonders bevorzugt handelt es sich bei $R^1$ um den Methylrest, den Methoxyrest, den Chlorrest und den Hydroxyrest.

Bei Rest $R^2$ handelt es sich vorzugsweise um Kohlenwasserstoffreste mit 14 bis 40 Kohlenstoffatomen, bevorzugt um Kohlenwasserstoffreste mit 14 bis 32 Kohlenstoffatomen, wobei der n-Octadecylrest bevorzugt ist.

Beispiele für Reste $R^2$ sind Alkylreste wie - $(CH_2)_{13}CH_3$, - $(CH_2)_{14}CH_3$, - $(CH_2)_{15}CH_3$, - $(CH_2)_{16}CH_3$, - $(CH_2)_{17}CH_3$, -$(CH_2)_{18}CH_3$, -$(CH_2)_{19}CH_3$, -$(CH_2)_{20}CH_3$, -$(CH_2)_{21}CH_3$, -$(CH_2)_{22}CH_3$, -$(CH_2)_{23}CH_3$,-$(CH_2)_{24}CH_3$, -

$-(CH_2)_{25}CH_3$, $-(CH_2)_{26}CH_3$, $-(CH_2)_{27}CH_3$, $-(CH_2)_{28}CH_3$, $-(CH_2)_{29}CH_3$, $-(CH_2)_{30}CH_3$, $-(CH_2)_{31}CH_3$, $-(CH_2)_{32}CH_3$ und ihre Isomeren.

Bei Rest $R^3$ handelt es sich bevorzugt um einen Rest der Formel IV

$$-R^5-[(NR^6)-R^7]_tNR^8R^9 \qquad (IV),$$

wobei

$R^5$ vorzugsweise einen zweiwertigen $C_1$- bis $C_{18}$-Kohlenwasserstoffrest,

$R^6$ vorzugsweise ein Wasserstoffatom oder einen unsubstituierten oder Fluor-, Chlor- oder Brom-substituierten $C_1$- bis $C_{10}$-Alkylrest,

$R^7$ vorzugsweise einen zweiwertigen $C_1$- bis $C_{18}$-Kohlenwasserstoffrest,

$R^8$ vorzugsweise ein Wasserstoffatom oder einen unsubstituierten oder Fluor-, Chlor- oder Brom-substituierten $C_1$- bis $C_{10}$-Alkylrest,

$R^9$ vorzugsweise ein Wasserstoffatom oder einen unsubstituierten oder Fluor-, Chlor- oder Brom-substituierten $C_1$- bis $C_{10}$-Alkylrest und

t vorzugsweise eine ganze Zahl im Wert von 0 bis 6 bedeutet.

Beispiele für die zweiwertigen $C_1$- bis $C_{18}$-Kohlenwasserstoffreste $R^5$ und $R^7$ sind Methylen-, Ethylen-, n- Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Oktylenreste, wie der n-Oktylenrest und iso-Oktylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Oktadecylenreste, wie der n-Oktadecylenrest;
Beispiele für $C_1$- bis $C_{10}$-Alkylreste $R^6$, $R^8$ und $R^9$ sind die unter $R^1$ bis $C_{10}$-Kohlenwasserstoffreste genann- ten.
Besonders bevorzugt handelt es sich bei $R^3$ um Reste der allgemeinen Formel V,

$$-R^{10}-[(NR^{11})-R^{12}]_uNR^{13}R^{14} \qquad (V),$$

wobei

$R^{10}$ vorzugsweise einen zweiwertigen $C_1$- bis $C_{12}$-Kohlenwasserstoffrest,

$R^{11}$ vorzugsweise ein Wasserstoffatom oder einen $C_1$- bis $C_{10}$-Alkylrest,

$R^{12}$ vorzugsweise einen zweiwertigen $C_1$- bis $C_{12}$-Kohlenwasserstoffrest,

$R^{13}$ vorzugsweise ein Wasserstoffatom oder einen $C_1$- bis $C_{10}$-Alkylrest,

$R^{14}$ vorzugsweise ein Wasserstoffatom oder einen $C_1$- bis $C_{10}$-Alkylrest und

u eine ganze Zahl im Wert von 0 bis 3 bedeutet.

Beispiele für die zweiwertigen $C_1$- bis $C_{12}$-Kohlenwasserstoffrest $R^{10}$ und $R^{12}$ sind die unter $R^5$ und $R^7$ bis $C_{12}$-Kohlenwasserstoffreste genannten.
Beispiele für $C_1$- bis $C_{10}$-Alkylreste $R^{11}$, $R^{13}$ und $R^{14}$ sind die unter $R^1$ bis $C_{10}$-Kohlenwasserstoffreste genannten.
Beispiele für die Reste $R^3$ sind vorzugsweise $-CH_2-CH_2-CH_2-NH_2$, $-CH_2-CH_2-CH_2-NH(CH_3)$, $-CH_2-CH_2-CH_2-$ $N(CH_3)_2$, $-CH_2-CH_2-CH_2-NH-CH_2-CH_2-NH_2$, $-CH_2-CH_2-CH_2-NH-CH_2-CH_2-NH(CH_3)$, $-CH_2-CH_2-CH_2-NH-CH_2-CH_2-$ $N(CH_3)_2$, $-CH_2-CH_2-CH_2-NH-CH_2-CH_2-NH(CH_2CH_3)$, $-CH_2-CH_2-CH_2-NH-CH_2-CH_2-N(CH_2CH_3)_2$ und $-CH_2-CH_2-CH_2-$ $NH(cyclo-C_6H_{11})$.
Obwohl in obiger Formel nicht angegeben, können bis zu 10 Molprozent der Diorganosiloxaneinheiten durch andere, meist jedoch als nur mehr oder weniger schwer vermeidbare Verunreinigungen vorliegende Siloxaneinheiten,

wie $R^1_3SiO_{1/2}$-, $R^1SiO_{3/2}$-, $SiO_{4/2}$-Einheiten, ersetzt sein, wobei $R^1$ die vorstehend angegebene Bedeutung hat.

Die erfindungsgemäßen, bei Raumtemperatur festen, Aminogruppen aufweisenden Organopolysiloxane der Formeln II und III haben vorzugsweise eine wachsartige Konsistenz und einen Schmelzpunkt zwischen 25 und 100°C.

Ein weiterer Gegenstand der Erfindung ist ein Verfahren zur Herstellung der bei Raumtemperatur festen, Aminogruppen aufweisenden Organopolysiloxane.

Vorzugsweise werden die erfindungsgemäßen, bei Raumtemperatur festen, Aminogruppen aufweisenden Organopolysiloxane hergestellt, indem Silane der allgemeinen Formel VI

$$R^1_gR^2_hSi \hspace{4cm} \text{(VI)}$$

oder nach in der Siliciumchemie bekannten Methoden hergestellte oligomere Hydrolysate der Silane der Formel VI oder ihre beliebigen Gemische zusammen mit Organosiliciumverbindungen umgesetzt werden, welche ausgewählt werden aus Silanen der allgemeinen Formel VII

$$R^1_iR^3_kSi \hspace{4cm} \text{(VII)}$$

oder Siloxanen, die aufgebaut sind aus Siloxaneinheiten der allgemeinen Formel VIII

$$R^1_iR^3_mSiO_{(4-l-m)/2} \hspace{4cm} \text{(VIII),}$$

oder ihren beliebigen Gemischen,
wobei

$R^1$, $R^2$ und $R^3$ die oben angegebene Bedeutung haben,
g 1, 2, 3 oder 4,
h 0, 1 oder 2,
i 1, 2, 3 oder 4,
k 0,1 oder 2,
l 0, 1, 2 oder 3 und
m 0,1 oder 2 ist.

Die erfindungsgemäßen bei Raumtemperatur festen, Aminogruppen aufweisenden Organopolysiloxane der allgemeinen Formel I werden vorzugsweise hergestellt, indem Silane der allgemeinen Formel VI mit Silanen der allgemeinen Formel VII oder Hydrolysaten, die nach in der Silicium-Chemie bekannten Methoden aus Silanen der allgemeinen Formel VII hergestellt sind, oder Siloxanen, die Einheiten der allgemeinen Formel VIII enthalten, oder ihren beliebigen Gemischen umgesetzt werden.

Die Siloxane, die aufgebaut sind aus Siloxaneinheiten der allgemeinen Formel VIII, können linear, verzweigt oder cyclisch sein.

Die erfindungsgemäßen bei Raumtemperatur festen, Aminogruppen aufweisenden Organopolysiloxane der allgemeinen Formel I werden besonders bevorzugt hergestellt, indem Silane der allgemeinen Formel VI, die nach in der Siliciumchemie bekannten Methoden zu einem oligomeren Hydrolysat umgesetzt worden sind, mit Silanen der allgemeinen Formel VII oder Hydrolysaten, die nach in der Silicium-Chemie bekannten Methoden aus Silanen der allgemeinen Formel VII hergestellt sind, oder Siloxanen, die Einheiten der allgemeinen Formel VIII enthalten, oder ihren beliebigen Gemischen umgesetzt werden.

Die Siloxane, die aufgebaut sind aus Siloxaneinheiten der allgemeinen Formel VIII, können linear, verzweigt oder cyclisch sein.

Das erfindungsgemäße Verfahren kann in Anwesenheit oder in Abwesenheit von Lösungsmitteln durchgeführt werden. Falls Lösungsmittel verwendet werden, sind Lösungsmittel mit einem Siedepunkt oder einem Siedebereich von bis zu 160 °C bei 0.1 MPa bevorzugt. Beispiele für solche Lösungsmittel sind Wasser; Alkohole, wie Methanol, Ethanol, n-Propanol, iso-Propanol, n-Amylalkohol, i-Amylalkohol; Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Diisopropylketon, Methyl-isobutylketon (MIBK) ; Ester, wie Ethylacetat, Butylacetat, Propylpropionat, Ethylbutyrat, Ethylisobutyrat; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Beim vorstehenden Verfahren können an sich bekannte, die Kondensations- sowie die Equilibrierungsreaktion fördernde Katalysatoren eingesetzt werden. Beispiele für die Kondensationssowie die Equilibrierungsreaktion fördernde Katalysatoren sind Schwefelsäure, Phosphorsäure, Trifluormethansulfonsäure, Eisen(II)-chlorid, Aluminiumchlorid, Bortrifluorid, Zinkchlorid, Kaolin, saure Zeolithe, sulfonierte Kohle, Alkalihydroxide, wie Lithium-, Natrium-, Kalium- und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, $\beta$-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propylphosphoniumhydroxid, Alkalisiloxanolate und Ammoniumorganosiloxanolate, wie Benzyltrimethylammoniumethylsiloxanolat, und Phosphor-Stickstoff-Verbindungen.

Besonders bevorzugt sind saure Katalysatoren wie Schwefelsäure, Trifluormethansulfonsäure und Salzsäure oder basische Katalysatoren wie Kaliumhydroxid, Tetramethylammoniumhydroxid und Benzyltrimethylammoniumhydroxid.

Beim vorstehenden Verfahren werden vorzugsweise 2 ppm bis 1 %, insbesondere 10 bis 1000 ppm an Katalysator, jeweils bezogen auf das Gewicht der eingesetzten Organosiliciumverbindungen, verwendet.

Das Verfahren wird vorzugsweise bei Temperaturen von 60 bis 200 °C, besonders bevorzugt 80 bis 170 °C und insbesondere 80 bis 140 °C und einem Druck der umgebenden Atmosphäre, also zwischen 900 und 1100 hPa durchgeführt.

Ein weiterer Gegenstand der Erfindung ist ein zweites Verfahren zur Herstellung der bei Raumtemperatur festen, Aminogruppen aufweisenden Organopolysiloxane.

Die erfindungsgemäßen, bei Raumtemperatur festen, Aminogruppen aufweisenden Organopolysiloxane können auch durch Addition von SiH-Gruppen aufweisenden Organopolysiloxanen, wie vorzugsweise

$$R^1{}_dR^2{}_eH_fSiO(SiR^1R^2O)_x[(SiHR^1O)_r(SiR^1{}_2O)_s]_ySiR^1{}_dR^2{}_eH_f,$$

oder Silanen mit aminofunktionellen Alkenen der allgemeinen Formel IX

$$H_2C=CR^{15}\text{-}R^5\text{-}[(NR^6)\text{-}R^7]_tNR^8R^9 \qquad (IX)$$

in Gegenwart eines an sich bekannten, die Hydrosilylierungsreaktion fördernden Katalysators, wie zum Beispiel vorzugsweise einer Platin- oder Rhodiumverbindung, hergestellt werden, wobei

$R^1$, $R^2$, $R^5$, $R^6$, $R^7$, $R^8$, $R^9$, d, e, f,x, r, s, y, und t die vorstehenden Bedeutungen aufweisen und $R^{15}$ Wasserstoffatom oder Rest $R^1$ bedeutet.

Als Katalysatoren werden vorzugsweise Platinmetalle und/oder deren Verbindungen eingesetzt, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6.6H_2O$, $Na_2PtCl_4 . 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 . 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec. -Butylamin, oder Ammonium-Platinkomplexe gemäß EP-B 110 370.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der in den Massen vorliegenden Diorganopolysiloxane, eingesetzt.

Die erfindungsgemäßen bei Raumtemperatur festen, Aminogruppen aufweisende Organopolysiloxane, können auch durch Umsetzung von Chlor- oder Brom-substituierten Alkylgruppen aufweisenden Organopolysiloxanen oder Organosilanen mit Aminen der allgemeinen Formel X

$$H[(NR^6)\text{-}R^7]_tNR^8R^9 \qquad (X)$$

hergestellt werden,

wobei

$R^6$, $R^7$, $R^8$, $R^9$ und t die vorstehenden Bedeutungen aufweisen.

Ein weiterer Gegenstand der Erfindung sind Zusammensetzungen, die bei Raumtemperatur feste, Aminogruppen aufweisende Organopolysiloxane enthalten. Die erfindungsgemäßen Zusammensetzungen werden bevorzugt unter Verwendung von bei Raumtemperatur festen Organopolysiloxanen aus Einheiten der Formel I und besonders bevorzugt aus bei Raumtemperatur festen Organopolysiloxanen der Formeln II oder III oder deren Gemischen hergestellt.

Zur Herstellung der erfindungsgemäßen Zusammensetzungen wird bei Raumtemperatur festes, Aminogruppen enthaltendes Organopolysiloxan in Mengen von vorzugsweise 0,01 bis 20,0 Gewichtsprozent, besonders bevorzugt von 0,05 bis 10,0 Gewichtsprozent, jeweils bezogen auf das Gesamtgewicht an dem erfindungsgemäßen Pflegemittel, eingesetzt.

Vorzugsweise werden zur Herstellung der erfindungsgemäßen Zusammensetzungen die bei Raumtemperatur festen, Aminogruppen aufweisenden Organopolysiloxane in Form einer wäßrigen Emulsion eingesetzt. Es können jedoch zu ihrer Herstellung auch die oben definierten Lösungsmittel verwendet werden.

Falls zur Herstellung der erfindungsgemäßen Zusammensetzungen Aminogruppen aufweisendes, bei Raumtemperatur festes Organopolysiloxan aus Einheiten der Formel I eingesetzt wird, wird die Emulsion vorzugsweise zubereitet, indem das bei Raumtemperatur feste, Aminogruppen aufweisende Organopolysiloxan aus Einheiten der Formel I mit einem Emulgator in Wasser emulgiert wird.

Das Emulgieren des bei Raumtemperatur festen, Aminogruppen enthaltenden Organopolysiloxans kann in üblichen, zur Herstellung von Emulsionen geeigneten Mischgeräten, wie zum Beispiel dem Ultra-Turrax®, T 50 der Firma IKA, erfolgen.

Bei der Herstellung der erfindungsgemäß eingesetzten, wäßrigen Emulsionen von bei Raumtemperatur festen, Aminogruppen enthaltenden Organopolysiloxanen können als Emulgatoren alle bisher bekannten, ionischen und nicht-ionischen Emulgatoren sowohl einzeln, als auch in Mischungen verschiedener Emulgatoren eingesetzt werden, mit denen auch bisher beständige wäßrige Emulsionen von Organopolysiloxanen hergestellt werden konnten. Es können auch solche Emulgiermittel, wie sie in DE 3613384C bzw. in der entsprechenden US-Anmeldung mit der Seriennummer USSN 19988 beschrieben sind, eingesetzt werden. Vorzugsweise werden nicht-ionische und kationaktive Emulgatoren eingesetzt.

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel R*-O-Z$_o$, worin R* einen linearen oder verzweigten, gesättigten oder ungesättigten Alkylrest mit im Mittel 8 - 24 C-Atomen und Z$_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N:N-dimethylammoniumsalze mit einem C$_8$-C$_{18}$-Acylrest und Alkyl-imidazolium-Betaine.

Besonders bevorzugt werden dabei Fettalkoholpolyglycolether, Nonylphenolpolyglycolether, Tri-n-butylphenolpolyglycolether und quarternäre Ammoniumsalze von gesättigten und ungesättigten Fettsäuren eingesetzt.

Die erfindungsgemäß eingesetzten, wäßrigen Emulsionen von bei Raumtemperatur festen, Aminogruppen enthaltenden Organopolysiloxanen enthalten Emulgator in Mengen von vorzugsweise 2 bis 20 Gew.-%, besonders bevorzugt 3 bis 10 Gew.-%, jeweils bezogen auf das Gesamtgewicht an eingesetztem, bei Raumtemperatur festem Organopolysiloxan.

Die erfindungsgemäß eingesetzten, wäßrigen Emulsionen von bei Raumtemperatur festen, Aminogruppen enhaltenden Organopolysiloxanen besitzen einen Festgehalt von vorzugsweise 10 bis 60 Gew.-%, insbesondere 15 bis 50 Gew.-%, jeweils bezogen auf das Gesamtgewicht der Emulsion.

Die zum Schmelzen notwendige Temperatur hängt von dem eingesetzten Organopolysiloxan ab und liegt vorzugsweise zwischen 20 und 100 °C, besonders bevorzugt zwischen 25 und 80 °C.

Das Emulgieren der Schmelze wird nach in der Silicium-Chemie üblichen Verfahren durchgeführt.

Die erfindungsgemäßen Zusammensetzungen, die bei Raumtemperatur feste, Aminogruppen aufweisende Organopolysiloxane enthalten, können auch in organischen Lösungsmitteln gelöst werden beziehungsweise Lösungsmittel enthalten und gegebenenfalls unter Zugabe von geeigneten Zusatzstoffen, die später beispielhaft aufgeführt werden, als Pflegemittel verwendet werden. Organische Lösungsmittel sind vorzugsweise Petroleumbenzine, besonders bevorzugt Aromaten-freie Petroleumbenzine. Es werden Lösungen mit einem Gehalt von vorzugsweise 0,01 bis 20 Gew.-%, bevorzugt von 0,05 bis 10 Gew.-% und besonders bevorzugt von 0,05 bis 5 Gew.-% an festem, Aminogruppen enthaltenden Organopolysiloxan hergestellt.

Die erfindungsgemäße Zusammensetzung kann je nach Einsatzzweck Zusatzstoffe, wie beispielsweise nicht siliciumhaltige Wachse, Verdickungsmittel, Schleifmittel, Konservierungsmittel und Additive sowie gegebenenfalls weitere Silicone beziehungsweise deren Emulsionen enthalten.

Beispiele für nicht siliciumhaltige Wachse sind natürliche Wachse pflanzlichen Ursprungs, wie Carnaubawachs und Candelillawachs, Montansäure- und Montanesterwachse, anoxidierte synthetische Paraffine, Polyethylenwachse, Polyvinyletherwachse und metallseifenhaltiges Wachs, wobei Carnaubawachs, Paraffinwachse und Polyethylenwachse bevorzugt und Paraffinwachse besonders bevorzugt sind.

Falls zur Herstellung der erfindungsgemäßen Zusammensetzung Wachse eingesetzt werden, werden sie vorzugsweise in Mengen von 0,01 bis 10,0 Gewichtsprozent, besonders bevorzugt 0,01 bis 5,0 Gewichtsprozent, jeweils bezogen auf das Gesamtgewicht der Zusammensetzung eingesetzt.

Beispiele für Verdickungsmittel sind Homopolysaccharide, Heteropolysaccharide, Polyacrylate, Carboxy- und Hydroxymethylcellulose, wobei Polysaccharide und Polyacrylate bevorzugt und Polyacrylate besonders bevorzugt sind.

Falls zur Herstellung der erfindungsgemäßen Zusammensetzung Verdickungsmittel eingesetzt werden, werden sie vorzugsweise in Mengen von 0,05 bis 5 Gewichtsprozent, besonders bevorzugt 0,1 bis 3 Gewichtsprozent, jeweils bezogen auf das Gesamtgewicht der Zusammensetzung, eingesetzt.

Beispiele für Schleifmittel sind Poliertonerde, sogenannte Kieselkreide, pyrogene Kieselsäure und natürliche Kieselgure, wie beispielsweise Sillitin N 85 der Firma Hoffmann Mineral, wobei Kieselkreide und Poliertonerde besonders bevorzugt sind.

Falls zur Herstellung der erfindungsgemäßen Zusammensetzung Schleifmittel eingesetzt werden, werden sie vorzugsweise in Mengen von 1 bis 20 Gewichtsprozent, besonders bevorzugt 1 bis 10 Gewichtsprozent, jeweils bezogen auf das Gesamtgewicht der Zusammensetzung, eingesetzt.

Beispiele für Konservierungsmittel sind Formaldehyd, Parabene, Benzylalkohol, Salicylsäure und deren Salze, Benzoesäure, und deren Salze sowie Isothiazolinone, wobei Formaldehyd und Isothiazolinone bevorzugt sind und Formaldehyd besonders bevorzugt ist.

Falls zur Herstellung der erfindungsgemäßen Zusammensetzung Konservierungsmittel eingesetzt werden, werden sie vorzugsweise in Mengen von 0,01 bis 0,30 Gewichtsprozent, besonders bevorzugt 0,05 bis 0,10 Gewichtsprozent, jeweils bezogen auf das Gesamtgewicht der Zusammensetzung, eingesetzt.

Beispiele für Additive sind Duftstoffe und Farbstoffe. Falls zur Herstellung der erfindungsgemäßen Zusammensetzung Additive eingesetzt werden, werden sie vorzugsweise in Mengen von 0,01 bis 1 Gewichtsprozent, besonders bevorzugt 0,05 bis 1 Gewichtsprozent, jeweils bezogen auf das Gesamtgewicht der Zusammensetzung eingesetzt.

Von jeder der vorstehend als mögliche Komponente für die erfindungsgemäßen wäßrigen oder lösungsmittelhaltigen Zusammensetzungen genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen Zusammensetzungen enthalten Wasser vorzugsweise in Mengen von 70 bis 99,9 Gewichtsprozent, besonders bevorzugt 80 bis 99,5 Gewichtsprozent, jeweils bezogen auf das Gesamtgewicht der Zusammensetzungen, wobei es sich vorzugsweise um entmineralisiertes Wasser handelt.

Die einzelnen Komponenten der erfindungsgemäßen Zusammensetzungen können auf beliebige Art und Weise miteinander vermischt werden. So können zum Beispiel die Zusatzstoffe dem bei Raumtemperatur festen Organopolysiloxan vor dem Emulgierschritt zugemischt werden. Die Zusatzstoffe können jedoch auch mit den fertigen Emulsionen von bei Raumtemperatur festen Organopolysiloxanen und gegebenenfalls von bei Raumtemperatur flüssigen Organopolysiloxanen vermischt werden, was bevorzugt ist.

Das Emulgieren beziehungsweise das Vermischen der zur Herstellung der erfindungsgemäßen Zusammensetzungen einsetzbaren Komponenten wird vorzugsweise bei einer Temperatur von 20 bis 70°C und einem Druck der umgebenden Atmosphäre, also zwischen 900 und 1100 hPa, durchgeführt. Es können aber auch höhere oder niedrigere Temperaturen sowie höhere oder niedrigere Drucke angewendet werden. Der Emulgierschritt kann in üblichen, zur Herstellung von Emulsionen geeigneten Mischgeräten, wie schnellaufenden Stator-Rotor-Rührgeräten nach Prof. P Willems, wie sie unter dem registrierten Warenzeichen Ultra-Turrax® bekannt sind, erfolgen.

Die erfindungsgemäßen Zusammensetzungen haben bei Raumtemperatur eine Konsistenz von dünnflüssig bis cremig pastös oder wachsartig.

Die erfindungsgemäßen Zusammensetzungen haben eine gute Emulsionsstabilität von mindestens zwei Jahren bei einer sachgemäßen Lagerung bei Raumtemperatur.

Ein weiterer Gegenstand der vorliegenden Erfindung ist ein Verfahren zur schützenden, pflegenden und hydrophobierenden Behandlung von harten und weichen sowie geschlossenen und porösen Oberflächen, wobei die erfindungsgemäße Zusammensetzung auf die harte oder weiche sowie geschlossene oder poröse Oberfläche aufgebracht wird.

Bei dem erfindungsgemäßen Verfahren wird die erfindungsgemäße Zusammensetzung durch Sprühen, Tauchen oder mit einem Hilfsmittel, wie Watte, Textilien, Schwamm, Rolle, Walze und Pinsel aufgetragen und verrieben. Die erfindungsgemäße Zusammensetzung hat den Vorteil, daß sie sich leicht auftragen und gut verreiben läßt.

Bei den vorzugsweise zu behandelnden harten und weichen sowie geschlossenen oder porösen Oberflächen handelt es sich insbesondere um metallische Oberflächen, lackierte Oberflächen, Kunststoffoberflächen, Keramikglasoberflächen, Holzoberflächen, Laminatoberflächen, Stein-, Leder-, Kork- oder Textiloberflächen. Ausgezeichnet eignet sich die erfindungsgemäße Zusammensetzung zur schützenden, pflegenden und dauerhaft hydrophobierenden Behandlung von Automobilkarosserien, Kochfeldern aus Keramikglas, Fußböden aller Art, Holzartikeln und Holzmöbeln, Stein sowie Artikeln aus Leder, Kork oder Textil. Neben den vorstehend beschriebenen Anwendungen können die erfindungsgemäßen Zusammensetzungen auch als Antischaummittel, als Agens zur Ausrüstung von Textilien oder in der Kosmetik als konditionierendes Agens eingesetzt werden.

Ein Vorteil der erfindungsgemäßen Zusammensetzungen ist, daß mit ihnen eine ausgezeichnete und langanhaltende Witterungs- und Waschbeständigkeit erzielt wird. Um diesen Effekt zu erreichen, genügen bereits niedrige Einsatzmengen an den erfindungsgemäßen Zusammensetzungen.

Ein weiterer Vorteil der erfindungsgemäßen Zusammensetzungen ist, daß die enthaltenen, bei Raumtemperatur festen, Aminogruppen aufweisenden Organopolysiloxane hydrolysestabil sind, da die langkettigen Alkylgruppen und Aminogruppen über eine Si-C-Bindung an das Siloxan gebunden sind. Darüber hinaus haben die erfindungsgemäßen Zusammensetzungen den Vorteil, daß sie nicht entflammbar (falls auf wäßriger Basis) sind.

Die erfindungsgemäßen Zusammensetzungen sind leicht applizierbar und verleihen den mit ihnen behandelten Oberflächen eine sehr hohe Farbtiefe und -sättigung sowie einen sehr hohen Glanz.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25 °C. Sofern nicht anders angegeben, wurden die nachstehenden Beispiele bei einem Druck der umgebenden Atmosphäre, also etwa 1000 hPa, und bei Raumtemperatur, also etwa bei 20 °C, beziehungsweise bei einer Temperatur, die sich beim Zusammengeben der Reaktanden bei Raumtemperatur ohne zusätzliche Heizung oder Kühlung einstellt, durchgeführt.

Die Randwinkelmessungen wurden wie folgt durchgeführt: Auf die zu testende Oberfläche wird aus einer Höhe von 15 mm ein Wassertropfen mit einem Volumen von 0,01 ml aufgebracht und mit Hilfe eines Goniometers (Typ 100-10 der Firma Rame-Hart Inc., New Jersey, USA) der Randwinkel bestimmt. Die Messung wird 4 mal wiederholt und aus den 5 Messungen der Mittelwert gebildet. Als Blindwert wird im Folgenden die Randwinkelmessung auf dem nicht mit der erfindungsgemäßen Zusammensetzung behandelten Substrat bezeichnet.

I. Beispiele zur Herstellung der erfindungsgemäßen, bei Raumtemperatur festen, Aminogruppen aufweisenden Organopolysiloxane

Beispiel I.A

Eine Lösung von 92 g (0,250 mol) Octadecylmethyldichlorsilan in 100 ml Benzin (Kp. = 80 - 110 °C) wird im Verlauf von 2 Stunden zu 200 g einer 12 %igen Natriumhydroxid-Lösung in Wasser getropft. Es wird dann 30 Minuten bei Raumtemperatur gerührt, und anschließend mit 14 ml konzentrierter Essigsäure neutralisiert. Nach Abtrennung der wäßrigen Phase wird die organische Phase über 10 g Kaliumcarbonat getrocknet, filtriert und in einem Vakuum von 1 mbar unter langsamer Temperatursteigerung von Raumtemperatur auf 130 °C von den flüchtigen Bestandteilen befreit. Man erhält ein weißes Siliconwachs mit einem Schmelzpunkt von 41,5 °C. (Vorprodukt A)

Beispiel I.B

Eine Mischung aus 45 g (0,140 mol Si-Octadecyl) eines OH-endständigen Polyoctadecylmethylsiloxans (Vorprodukt A), 5 g (0,024 mol) 3-(2-aminoethylamino)propyldimethyoxmethylysilan und 0,20 g einer 20 %igen Kaliumhydroxid-Lösung in Wasser wird langsam auf 110 °C erwärmt. Zur Entfernung der flüchtigen Bestandteile wird nach 1 Stunde zusätzlich ein Vakuum von 100 mbar angelegt und zwei Stunden unter diesen Bedingungen gerührt. Nun wird auf 70 °C abgekühlt und bei Normaldruck werden zur Neutralisation 0,30 g 10 %ige Essigsäure in Toluol zugegeben. Abschließend wird 1 Stunde bei einem Vakuum von 1 mbar ausgeheizt und dann in der Wärme filtriert. Man erhält ein leicht gelbliches aminofunktionelles Siliconwachs mit einem Schmelzpunkt von 45,5 °C und einer Aminzahl von 0,90 mequiv/g.

Beispiel I.C

Ein Gemisch aus 35,9 g (0,10 mol) Octadecylmethyldimethoxysilan, 4,5 g Wasser, 0,20 g einer 10 %igen Salzsäure-Lösung und 12 g Toluol wird langsam auf 80 °C erwärmt und 2 Stunden bei dieser Temperatur gerührt. Dann werden in der Wärme zunächst 0,30 g einer 20 %igen Kaliumhydroxid-Lösung in Wasser zugegeben und schließlich 4,2 g (0,02 mol) 3-(2-Aminoethylamino)propyldimethyoxymethylsilan über 15 Minuten zugetropft. Nun wird damit begonnen bis zu einer Temperatur von 120 °C die flüchtigen Bestandteile aus der Reaktionsmischung abzudestillieren. Das Kaliumhydroxid wird durch Zusatz von 0,6 g 10 %ige Essigsäure in Toluol anschließend desaktiviert. Abschließend wird die Reaktionsmischung bei einem Vakuum von ca. 1 mbar und einer Temperatur von 130 °C für eine Stunde ausgeheizt und dann filtriert. Man erhält ein leicht gelbliches aminofunktionelles Siliconwachs mit einem Schmelzpunkt von 41,0 °C und einer Aminzahl von 1,17 mequiv/g.

Beispiel I.D

Eine Mischung aus 31,3 g (0,10 mol Si-Octadecyl) eines OH-endständigen Polyoctadecylmethylsiloxans (Vorprodukt A), 3,2 g (0,02 mol Si-3-(2-aminoethylamino)propyl) eines OH-endständigen Polymethyl-3-(2-aminoethylamino)propylsiloxans, 0,11 g einer 20 %igen Kaliumhydroxid-Lösung in Wasser und 40 g Toluol wird in einer Apparatur mit Wasserabscheider unter Rückfluß zum Sieden erhitzt. Nach drei Stunden wird das Toluol abdestilliert und das Kaliumhydroxid durch Zusatz von 0,03 g konzentrierter Essigsäure neutralisiert. Abschließend wird die Reaktionslösung eine Stunde bei einer Temperatur von 140 °C und einem Vakuum von 1 mbar ausgeheizt und in der Wärme filtriert. Man erhält ein weißes aminofunktionelles Siliconwachs mit einem Schmelzpunkt von 39,3 °C und einer Aminzahl von 1.16 mequiv/g.

Beispiel I.E

Eine Mischung aus 45,0 g (0,14 mol Si-Octadecyl) eines OH-endständigen Polyoctadecylmethylsiloxans (Vorprodukt A), 6,0 g (0,024 mol) 3-(3-Dimethylaminopropylamino)-propyldimethyoxmethylysilan und 0,20 g einer 20 %igen Kaliumhydroxid-Lösung in Wasser wird langsam auf 110 °C erwärmt. Zur Entfernung der flüchtigen Bestandteile wird nach 1 Stunde zusätzlich ein Vakuum von 100 mbar angelegt und zwei Stunden unter diesen Bedingungen gerührt. Nun wird auf 70 °C abgekühlt und bei Normaldruck werden zur Neutralisation 0,53 g 10 %ige Essigsäure in Toluol zugegeben. Abschließend wird 1 Stunde bei einem Vakuum von 1 mbar ausgeheizt und dann in der Wärme filtriert. Man erhält ein weißes Siliconwachs mit einem Schmelzpunkt von 41,1 °C und einer Aminzahl von 0,91 mequiv/g.

Beispiel I.F

Eine Mischung aus 45,0 g (0,14 mol Si-Octadecyl) eines OH-endständigen Polyoctadecylmethylsiloxans (Vorprodukt A), 5,4 g (0,021 mol) 3-(2-Diethylaminoethylamino)-propyldimethoxmethylysilan und 0,20 g einer 20 %igen Kaliumhydroxid-Lösung in Wasser wird langsam auf 110 °C erwärmt. Zur Entfernung der flüchtigen Bestandteile wird nach 1 Stunde zusätzlich ein Vakuum von 100 mbar angelegt und zwei Stunden unter diesen Bedingungen gerührt. Nun wird auf 70 °C abgekühlt und bei Normaldruck werden zur Neutralisation 0,53 g 10 %ige Essigsäure in Toluol zugegeben. Abschließend wird 1 Stunde bei einem Vakuum von 1 mbar ausgeheizt und dann in der Wärme filtriert. Man erhält ein weißes Siliconwachs mit einem Schmelzpunkt von 41,2 °C und einer Aminzahl von 0,83 mequiv/g.

Beispiel I.G

Eine Mischung aus 31,3 g (0,10 mol Si-Octadecyl) eines OH-endständigen Polyoctadecylmethylsiloxans, 4,0 g (0,02 mol Si-3-cyclohexylaminopropyl) eines OH-ständigen Polymethyl-3-cyclohexylaminopropylsiloxans, 0,11 g einer 20 %igen Kaliumhydroxid-Lösung in Wasser und 40 g Toluol wird in einer Apparatur mit Wasserabscheider unter Rückfluß zum Sieden erhitzt. Nach drei Stunden wird das Toluol abdestilliert und das Kaliumhydroxid durch Zusatz von 0,03 g konzentrierter Essigsäure neutralisiert. Abschließend wird die Reaktionslösung eine Stunde bei einer Temperatur von 140 °C und einem Vakuum von 1 mbar ausgeheizt und in der Wärme filtriert. Man erhält ein weißes aminofunktionelles Siliconwachs mit einem Schmelzpunkt von 39,1 °C und einer Aminzahl von 0,57 mequiv/g.

II. Weitere Bespiele zur Herstellung und Anwendungsbeispiele als Pflegemittel für Oberflächen

Um die Vorteile der bei Raumtemperatur festen, Aminogruppen aufweisenden Organopolysiloxane aufzuzeigen, wurden fünf bei Raumtemperatur feste Organopolysiloxane ohne und mit unterschiedlichem Gehalt an Aminogruppen hergestellt und damit Anwendungstests durchgeführt. Die fünf Organopolysiloxane werden in den unteren Anwendungsbeispielen mit Wachs A - E bezeichnet.

Vergleichsbeispiel II.A

892,5 g (2,5 mol) Octadecylmethyldimethoxysilan, 180,0 g Wasser, 321,7 g Toluol werden zusammen mit 2,8 g 18%iger wäßriger HCl-Lösung vorgelegt, unter ständigem Rühren wird auf 90°C aufgeheizt, bei dieser Temperatur wird 5 Stunden lang das entstehende Methanol abdestilliert, auf 60°C abgekühlt, 4,2 g 20%ige wäßrige KOH-Lösung zugegeben, unter ständigem Rühren und gleichzeitigem Ausdestilllieren auf 140°C aufgeheizt, 1 Stunde bei 140°C gehalten, heiß filtriert. Man erhält ein weißes, festes Siliconwachs mit einem Schmelzpunkt von 48,1 °C. (Wachs A)

Beispiel II.B

195,6 g (0,63 mol Si-Octadecyl) des Wachses A aus Beispiel II.A wird zusammen mit 4,1 g (0,02 mol) 3-(2-Ainoethylamino)propyldimethoxmethylysilan und 0,8 g 20% iger KOH-Lösung vorgelegt, unter ständigem Rühren auf 110°C aufgeheizt und 3 Stunden bei dieser Temperatur gehalten. Nach dem Abkühlen auf 60°C werden 0,2 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein festes, gelbliches aminofunktionelles Siliconwachs mit einem Schmelzpunkt von 43,5 °C und einer Aminzahl von 0,23 mequiv/g. (Wachs B)

Beispiel II.C

186,3 g (0,60 mol Si-Octadecyl) des Wachses A aus Beispiel II.A wird zusammen mit 12,4 g (0,06 mol) 3-(2-Anoethylamino)propyldimethoxymethylsilan und 0,8 g 20% iger KOH-Lösung vorgelegt, unter ständigem Rühren auf 110°C aufgeheizt und 3 Stunden bei dieser Temperatur gehalten. Nach dem Abkühlen auf 60°C werden 0,2 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein festes, gelbliches aminofunktionelles Siliconwachs mit einem Schmelzpunkt von 44,5 °C und einer Aminzahl von 0,58 mequiv/g. (Wachs C)

Beispiel II.D

180,1 g (0,58 mol Si-Octadecyl) des Wachses A aus Beispiel II.A wird zusammen mit 20,6 g (0,1 mol) 3-(2-Ainoethylamino)propyldimethoxmethylysilan und 0,8 g 20% iger KOH-Lösung vorgelegt, unter ständigem Rühren auf 110°C aufgeheizt und 3 Stunden bei dieser Temperatur gehalten. Nach dem Abkühlen auf 60°C werden 0,2 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein festes, gelbliches aminofunktionelles Siliconwachs mit einem Schmelzpunkt von 47,5 °C und einer Aminzahl von 1,04 mequiv/g. (Wachs D)

Beispiel II.E

183,2 g (0,59 mol Si-Octadecyl) des Wachses A aus Beispiel II.A wird zusammen mit 30,9 g (0,15 mol) 3-(2-aminoethylamino)propyldimethoxymethylsilan und 0,8 g 20% iger KOH-Lösung vorgelegt, unter ständigem Rühren auf 110°C aufgeheizt und 3 Stunden bei dieser Temperatur gehalten. Nach dem Abkühlen auf 60°C werden 0,2 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein festes, gelbliches aminofunktionelles Siliconwachs mit einem Schmelzpunkt von 40,0 °C und einer Aminzahl von 1,35 mequiv/g. (Wachs E)

Benzinische Formulierung

Testung der Hydrophobierung

Die Wachse A - E werden 2%ig in Petroleumbenzin 100/140° (käuflich erhältlich bei der Firma Merck) gelöst und mit Watte auf lackierte Bleche einer Kraftfahrzeugkarosserie mit einem Kontaktwinkel von 66° gegenüber Wasser aufgetragen und verrieben. Nach 15 Minuten Stehenlassen bei Raumtemperatur werden die Randwinkel der behandelten Oberflächen gegenüber Wasser gemessen und anschließend werden die Substrate bei Raumtemperatur 4 mal 15 Minuten mit jeweils 10 l pro 100 cm$^2$ Oberfläche mit Leitungswasser einer Temperatur von ca. 6°C aus einem Abstand von 20 cm beregnet. Das Ergebnis der Randwinkelmessungen befindet sich in Tabelle 1.

Tabelle 1

| Dauer der Beregnung [min] | Wachs A Randwinkel [°] | Wachs B Randwinkel [°] | Wachs C Randwinkel [°] | Wachs D Randwinkel [°] | Wachs E Randwinkel [°] |
|---|---|---|---|---|---|
| 0 | 104 | 99 | 98 | 95 | 92 |
| 15 | 97 | 94 | 94 | 94 | 89 |
| 30 | 94 | 94 | 94 | 92 | 89 |
| 45 | 93 | 93 | 93 | 90 | 90 |
| 60 | 91 | 92 | 93 | 91 | 89 |

Die erfindungsgemäßen bei Raumtemperatur festen Aminogruppen enthaltenden Organopolysiloxane sind hinsichtlich ihrer zeitabhängigen Hydrophobierwirkung bei Raumtemperatur festen Organopolysiloxanen ohne Aminogruppen absolut ebenbürtig oder besser.

Testung der Oleophobierung

Die Wachse A - E werden 2%ig in Petroleumbenzin 100/140° (käuflich erhältlich bei der Firma Merck) gelöst und mit Watte auf lackierte Bleche einer Kraftfahrzeugkarosserie mit einem Kontaktwinkel von 20° gegenüber Paraffinöl aufgetragen und verrieben. Nach 15 Minuten Stehenlassen bei Raumtemperatur werden die Randwinkel der behandelten Oberflächen gegenüber Paraffinöl gemessen. Die Ergebnisse sind in Tabelle 2 aufgelistet:

Tabelle 2

| Wachs A Randwinkel [°] | Wachs B Randwinkel [°] | Wachs C Randwinkel [°] | Wachs D Randwinkel [°] | Wachs E Randwinkel [°] |
|---|---|---|---|---|
| 35 | 42 | 35 | 37 | 34 |

Die erfindungsgemäßen bei Raumtemperatur feste Aminogruppen enthaltenden Organopolysiloxane sind hinsichtlich ihrer zeitabhängigen Oleophobierwirkung bei Raumtemperatur festen Organopolysiloxanen ohne Aminogruppen absolut ebenbürtig oder besser.

Testung der Farbsättigung

Die Wachse A - E werden 2%ig in Petroleumbenzin 100/140° (käuflich erhältlich bei der Firma Merck) gelöst und mit Watte auf ein schwarz lackiertes Blech einer Kraftfahrzeugkarosserie nebeneinander aufgetragen und auspoliert. Anschließend wird die Farbsättigung im Vergleich zum unbehandelten Blech beurteilt.

Das bei Raumtemperatur feste Organopolysiloxanwachs A ohne Aminogruppen zeigt nur eine geringe Farbsättigung. Die mit den erfindungsgemäßen bei Raumtemperatur festen, Aminogruppen enthaltenden Organopolysiloxanen erzielte Farbsättigung ist deutlich kräftiger und steigt von Siliconwachs B bis Siliconwachs E deutlich an.

Wässerige Formulierung

Beispiel II.F

Zu 175 g Wachs A aus Beispiel II.A werden 25 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergerätes emulgiert, indem unter ständigem Rühren 300 g entionisiertes Wasser zugegeben werden. Es wird eine wäßrige Emulsion von bei Raumtemperatur festem Organopolysiloxan ohne Aminogruppen mit einem Festgehalt von 38 Gewichtsprozent, bezogen auf das Gesamtgewicht an Emulsion, erhalten.

Beispiel II.G

Zu 175 g Wachs B aus Beispiel II.B werden 25 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergerätes emulgiert, indem unter ständigem Rühren 300 g entionisiertes Wasser zugegeben werden. Es wird eine wäßrige Emulsion von bei Raumtemperatur festem aminofunktionellen Organopolysiloxan mit einem Festgehalt von 38 Gewichtsprozent, bezogen auf das Gesamtgewicht an Emulsion, erhalten.

Beispiel II.H

Zu 175 g mit Trimethylsiloxy-Einheiten terminiertem Dimethylpolysiloxan mit einer Viskosität von 350 mm$^2$/s (käuflich erhältlich unter der Bezeichnung "Siliconoel AK 350" bei der Wacker-Chemie GmbH, München) werden 15 g eines Fettalkoholpolyglykolether-Emulgators (käuflich erhältlich unter der Bezeichnung "Genapol" bei der Hoechst AG) gegeben und verrührt. Diese Mischung wird dann mit Hilfe eines Emulgiergerätes emulgiert, indem unter ständigem Rühren 310 g entionisiertes Wasser zugegeben werden. Es wird eine wäßrige Emulsion von bei Raumtemperatur flüssigem Polydimethylsiloxan mit einem Festgehalt von 38 Gewichtsprozent, bezogen auf das Gesamtgewicht an Emulsion, erhalten.

Anwendungsfertige Formulierungen:

Beipiel II.K

0,3 g Polyacrylsäuren (käuflich erhältlich unter der Bezeichnung Carbopol bei der Fa. Goodrich, Neuss) werden unter Rühren in 96,4 g entionisiertem Wasser dispergiert und anschließend 2,0 g der unter Beispiel II.F beschriebenen Emulsion, 1,0 g der unter Beispiel II.H beschriebenen Emulsion, 0,2 g Triethanolamin und 0,1 g Formalin-Lösung (40 %ig) zugegeben.

Beipiel II.L

0,3 g Polyacrylsäuren (käuflich erhältlich unter der Bezeichnung Carbopol bei der Fa. Goodrich, Neuss) werden unter Rühren in 96,4 g entionisiertem Wasser dispergiert und anschließend 2,0 g der unter Beispiel II.G beschriebenen Emulsion, 1,0 g der unter Beispiel II.H beschriebenen Emulsion, 0,2 g Triethanolamin und 0,1 g Formalin-Lösung (40 %ig) zugegeben.

Die so erhaltenen Hydrophobierungsmittel werden mit Watte auf das Blech einer Kraftfahrzeugkarosserie mit einem Kontaktwinkel von 66° gegenüber Wasser aufgetragen und verrieben. Nach 15 Minuten Stehenlassen bei Raumtemperatur wird der Randwinkel gegenüber Wasser gemessen und anschließend wird das Blech bei Raumtemperatur 4 mal 15 Minuten mit jeweils 10 l pro 100 $cm^2$ Oberfläche mit Leitungswasser einer Temperatur von ca. 6°C aus einem Abstand von 20 cm beregnet. Das Ergebnis der Randwinkelmessungen gegenüber Wasser befindet sich in Tabelle 3.

Tabelle 3

| Dauer der Beregnung [min] | Formulierung II.K Randwinkel [°] | Formulierung II.L Randwinkel [°] |
|---|---|---|
| 0 | 94 | 97 |
| 15 | 92 | 95 |
| 30 | 90 | 94 |
| 45 | 90 | 91 |
| 60 | 88 | 90 |

Die erfindungsgemäßen bei Raumtemperatur feste Aminogruppen enthaltenden Zusammensetzungen sind hinsichtlich ihrer zeitabhängigen Hydrophobierwirkung bei Raumtemperatur festen Organopolysiloxanen ohne Aminogruppen überlegen.

III. Anwendungsbeispiel als Glaskeramikpflegemittel

Um den Vorteil der erfindungsgemäßen bei Raumtemperatur festen Aminogruppen enthaltenden Organopolysiloxane aufzuzeigen, wurde das bei Raumtemperatur feste cyclohexylaminopropylfunktionelle Organopolysiloxan (Wachs F) hergestellt und im Vergleich zu einem bei Raumtemperatur flüssigen aminofunktionellen Organopolysiloxan (Oel A) und einem bei Raumtemperatur festen Organopolysiloxan ohne Aminogruppen (Wachs A) auf seine Schutzwirkung auf einer Glaskeramikplatte getestet.

Beispiel III.A

118,0 g (0,38 mol Si-Octadecyl) des Wachses A aus Beispiel II.A wird zusammen mit 19,5 g (0,075 mol) Cyclohexylaminopropyltrimethoxysilan und 0,5 g 20% iger KOH-Lösung vorgelegt, unter ständigem Rühren auf 110°C aufgeheizt und 3 Stunden bei dieser Temperatur gehalten. Nach dem Abkühlen auf 60°C werden 0,12 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein festes, gelbliches aminofunktionelles Siliconwachs mit einem Schmelzpunkt von 37,5 °C und einer Aminzahl von 0,54 mequiv/g. (Wachs F)

Beispiel III.B

892,5 g (2,5 mol) Octadecylmethyldimethoxysilan, 180,0 g Wasser, 321,7 g Toluol werden zusammen mit 2,8 g 18%iger wäßriger HCl-Lösung vorgelegt, unter ständigem Rühren wird auf 90°C aufgeheizt, bei dieser Temperatur wird 5 Stunden lang das entstehende Methanol abdestilliert, auf 60°C abgekühlt, 4,2 g 20%ige wäßrige KOH-Lösung zugegeben, unter ständigem Rühren und gleichzeitigem Ausdestilllieren auf 140°C aufgeheizt, 1 Stunde bei 140°C gehalten, heiß filtriert. Man erhält ein weißes Siliconwachs mit einem Schmelzpunkt von 48,1 °C. (Wachs A)

Beispiel III.C

180,0 g (2,43 mol SiMe$_2$O) $\alpha,\omega$-Dihydroxypolydimethylsiloxan mit einer Viskosität von 60 mm$^2$/s wird zusammen mit 9,5 g (0,04 mol) Cyclohexylaminopropyltrimethoxysilan und 0,72 g 20% iger KOH-Lösung vorgelegt, unter ständigem Rühren auf 105°C aufgeheizt und 2 Stunden bei dieser Temperatur gehalten. Nach dem Abkühlen auf 70°C werden 0,19 g 99,8 %ige Essigsäure zugegeben und das Produkt unter Vakuum bei 10 mbar bis 140°C ausdestilliert. Nach dem erneuten Abkühlen auf 100°C wird das Produkt filtriert. Man erhält ein klares, gelbliches aminofunktionelles Siliconöl mit einer Viskosität von 95 mm$^2$/s und einer Aminzahl von 0,2 mequiv/g. (Oel A)

Beispiel III.D

Herstellung eines Reinigungs- und Pflegemittels für Glaskeramikoberflächen unter Verwendung des in Beispiel III.A beschriebenen bei Raumtemperatur festen Organopolysiloxans in Form einer Öl-in-Wasser-Emulsion mit folgender Zusammensetzung:

| | |
|---|---|
| Aminofunktionelles Organopolysiloxan (Wachs F) | 20 Gew. % |
| Lineares Dimethylpolysiloxan mit einer Viskosität von 350 mm$^2$/s bei 25°C | 2 Gew. % |
| Flüssiger aromatenfreier Kohlenwasserstoff mit Siedebereich 180-210 °C | 26 Gew. % |
| Nichtionogener Emulgator (z.B. Fettalkoholpolyglykolether mit ca. 10 Ethylenoxideinheiten) | 10 Gew. % |
| Zitronensäure | 1 Gew. % |
| Tonerde der Teilchengröße 1 - 100 $\mu$m | 10 Gew. % |
| Wasser | 31 Gew. % |

Die beiden Organopolysiloxane wurden zusammen mit dem flüssigen aromatenfreien Kohlenwasserstoff und den Emulgatoren zu einer Ölphase vermischt und anschließend unter ständigem Rühren das Wasser langsam zugegeben. Zum Schluß wurde die Zitronensäure und die Tonerde eindispergiert. Man erhielt eine lagerstabile, dickflüssige Öl-in-Wasser-Emulsion.

Beispiel III.E

Herstellung eines Reinigungs- und Pflegemittels für Glaskeramikoberflächen mit der gleichen Zusammensetzung wie unter Beispiel III.D beschrieben mit dem Unterschied, daß statt dem Wachs F das unter Beispiel III.B hergestellte Wachs A eingesetzt wurde.

Beispiel III.F

Herstellung eines Reinigungs- und Pflegemittels für Glaskeramikoberflächen mit der gleichen Zusammensetzung wie unter Beispiel III.D beschrieben mit dem Unterschied, daß statt dem Wachs F das unter Beispiel III.C hergestellte Oel A eingesetzt wurde.

Beispiel III.G

Vergleichende Testung der Reinigungs- und Pflegewirkung Durchführung

Auf eine leicht verschmutzte Dekorglaskeramikplatte mit den Abmessungen von 25 cm x 25 cm wurde ca. 1 g des Pflegemittels aufgetragen und gleichmäßig verteilt. Anschließend wurde die Platte mit einem feuchten Haushaltstuch so lange poliert, bis die Oberfläche streifenfrei erscheint.

Beurteilt wurde an dieser Stelle die Reinigungswirkung und die Griffestigkeit des Schutzfilms.

Anschließend wurde zur Überprüfung der Schutzwirkung die Oberfläche mit einer ca. 3 mm hohen Schicht Zucker bestreut und bis zur völligen Karamelisierung bzw. Carbonisierung des Zuckers aufgeheizt. Nach dem Erkalten wurde die Haftung des karamelisierten Zuckers, die Leichtigkeit und Vollständigkeit des Ablösens von der Oberfläche sowie die Oberflächenbeschaffenheit in Bezug auf Beschädigungen (Schollenbrüche) beurteilt.

In der Tabelle 4 sind die Ergebnisse zusammengefaßt:

Tabelle 4

| Beispiel | III.D | III.E | III.F |
|---|---|---|---|
| Substantivität | gut | gut | mittel |
| Polierbarkeit | sehr gut | gut | gut |
| Reinigungswirkung | gut | gut | gut |
| Schutzwirkung (Trenneffekt und Oberflächenbeschaffenheit) | sehr gut | schlecht | gut |

**Patentansprüche**

1. Bei Raumtemperatur feste, Aminogruppen aufweisende Organopolysiloxane, die aufgrund von Temperaturänderungen reversibel ihre Aggregatszustände ändern können.

2. Bei Raumtemperatur feste, Aminogruppen aufweisende Organopolysiloxane nach Anspruch 1, dadurch gekennzeichnet, daß sie Siloxaneinheiten der allgemeinen Formel I

$$R^1_a R^2_b R^3_c SiO_{(4-a-b-c)/2} \qquad (I)$$

aufweisen, wobei

$R^1$ gleich oder verschieden sein kann und einwertige unsubstituierte oder substituierte Kohlenwasserstoffreste, Alkoxyreste, Hydroxyreste oder Halogenreste bedeutet,

$R^2$ gleich oder verschieden sein kann und einwertige unsubstituierte Kohlenwasserstoffreste bedeutet,

$R^3$ gleich oder verschieden sein kann und Aminogruppen enthaltende Kohlenwasserstoffreste bedeutet,

a 0,1, 2 oder 3,

b 0, 1 oder 2,

c 0, 1 oder 2 ist,

mit der Maßgabe, daß die Summe aus a + b + c kleiner oder gleich 3 ist und im gesamten Molekül zumindest eine Einheit vorhanden ist, die einen Aminogruppen enthaltenden Kohlenwasserstoffrest aufweist.

3. Bei Raumtemperatur feste, Aminogruppen aufweisende Organopolysiloxane nach Anspruch 1 oder 2, dadurch gekennzeichnet, daß sie lineare oder cyclische Organopolysiloxane oder ihre Gemische aus den Formeln II

$$R^1_d R^2_e R^3_f SiO(SiR^1 R^2 O)_x [(SiR^1 R^3 O)_r (SiR^1_2 O)_s]_y SiR^1_d R^2_e R^3_f \qquad (II)$$

oder III

$$[(SiR^1R^4O)]_z \qquad (III)$$

enthalten, wobei

$R^1$, $R^2$ und $R^3$ die oben angegebene Bedeutung haben,
$R^4$ gleich oder verschieden sein kann und $R^1$, $R^2$ oder $R^3$ bedeutet,
d 1, 2 oder 3,
e 0, 1 oder 2,
f 0, 1 oder 2 ist,
r eine ganze Zahl im Wert von 0 bis 150 ist,
s eine ganze Zahl im Wert von 0 bis 200 ist,
x eine ganze Zahl im Wert von 0 bis 300 ist,
y eine ganze Zahl im Wert von 0 bis 200 ist und
die Summe aus x + y 0 bis 500 beträgt, wobei die Einheiten $(SiR^1R^3O)_r$ und $(SiR^1_2O)_s$ in beliebiger Reihenfolge auftreten können,
z eine ganze Zahl im Wert von 3 bis 30 ist,
mit der Maßgabe, daß mindestens ein Rest $R^2$ in Formel II die Bedeutung von Kohlenwasserstoffrest mit mindestens 14 Kohlenstoffatomen hat und mindestens ein Rest $R^3$ in Formel II vorhanden ist,
und mit der Maßgabe, daß mindestens der Rest $R^4$ in Formel III gleichzeitig einmal die Bedeutung von $R^2$ und einmal die Bedeutung von $R^3$ hat.

4. Verfahren zur Herstellung der bei Raumtemperatur festen, Aminogruppen aufweisenden Organopolysiloxane nach einem oder mehreren der Ansprüche 1 bis 3, dadurch gekennzeichnet, daß Silane der allgemeinen Formel VI

$$R^1_gR^2_hSi \qquad (VI)$$

oder oligomere Hydrolysate der Silane der Formel VI oder ihre beliebigen Gemische zusammen mit Organosiliciumverbindungen umgesetzt werden, welche ausgewählt werden aus Silanen der allgemeinen Formel VII

$$R^1_iR^3_kSi \qquad (VII)$$

oder Siloxanen, die aufgebaut sind aus Siloxaneinheiten der allgemeinen Formel VIII

$$R^1_lR^3_mSiO_{(4-l-m)/2} \qquad (VIII),$$

oder ihren beliebigen Gemischen,
wobei

$R^1$, $R^2$ und $R^3$ die oben angegebene Bedeutung haben,
g 1, 2 oder 3,
h 0, 1 oder 2,
i 1, 2 oder 3,
k 0,1 oder 2,
l 0, 1, 2 oder 3 und
m 0,1 oder 2 ist.

5. Verfahren zur Herstellung der bei Raumtemperatur festen, Aminogruppen aufweisenden Organopolysiloxane nach einem oder mehreren der Ansprüche 1 bis 3, dadurch gekennzeichnet, daß die bei Raumtemperatur festen, Aminogruppen aufweisenden Organopolysiloxane durch Addition von SiH-Gruppen aufweisenden Organopolysiloxanen, wie vorzugsweise

$$R^1_dR^2_eH_fSiO(SiR^1R^2O)_x[SiHR^1O)_r(SiR^1_2O)_s]_ySiR^1_dR^2_eH_f,$$

oder Silanen mit aminofunktionellen Alkenen der allgemeinen Formel IX

$$H_2C=CR^{15}-R^5-[(NR^6)-R^7]_tNR^8R^9 \qquad (IX)$$

in Gegenwart eines, die Hydrosilylierungsreaktion fördernden Katalysators, hergestellt werden, wobei

$R^1$ und $R^2$ die oben angegebene Bedeutung haben und

$R^5$ einen zweiwertigen $C_1$- bis $C_{18}$-Kohlenwasserstoffrest,

$R^6$ ein Wasserstoffatom oder einen unsubstituierten oder Fluor-, Chlor- oder Brom-substituierten $C_1$- bis $C_{10}$-Alkylrest,

$R^7$ einen zweiwertigen $C_1$- bis $C_{18}$-Kohlenwasserstoffrest,

$R^8$ ein Wasserstoffatom oder einen unsubstituierten oder Fluor-, Chlor- oder Brom-substituierten $C_1$- bis $C_{10}$-Alkylrest,

$R^9$ ein Wasserstoffatom oder einen unsubstituierten oder Fluor-, Chlor- oder Brom-substituierten $C_1$- bis $C_{10}$-Alkylrest, $R^{15}$ ein Wasserstoffatom oder einen Rest $R^1$ und

t eine ganze Zahl im Wert von 0 bis 6 bedeutet.

6. Zusammensetzung, dadurch gekennzeichnet, daß sie die bei Raumtemperatur festen, Aminogruppen aufweisenden Organopolysiloxane nach einem oder mehreren der Ansprüche 1 bis 3 oder hergestellt nach Ansprüchen 4 bis 5 in Mengen von 0,01 bis 10,0 Gewichtsprozent bezogen auf das Gesamtgewicht der Zusammensetzung enthält.

7. Verfahren zur Behandlung von Oberflächen, dadurch gekennzeichnet, daß Zusammensetzungen nach Anspruch 6 verwendet werden.

8. Verfahren zur Behandlung von Oberflächen, dadurch gekennzeichnet, daß Zusammensetzungen nach Anspruch 6 zur Behandlung von Glaskeramikoberflächen verwendet werden.

Europäisches
Patentamt

**EUROPÄISCHER RECHERCHENBERICHT**

Nummer der Anmeldung

EP 98 11 5654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 5 077 421 A (C. D. SELVIG) 31. Dezember 1991 * Spalte 2, Zeile 8 * * Spalte 2, Zeile 39 * * Spalte 4, Formeln * * Ansprüche 1-4 * --- | 1-4 | C08G77/26 C08G77/388 C08L83/08 C09G1/08 |
| X | EP 0 659 803 A (GOLDSCHMIDT) 28. Juni 1995 * Ansprüche 1,2 * --- | 1-3,5 | |
| D,X | US 4 699 988 A (F. J. TRAVER ET AL.) 13. Oktober 1987 * Spalte 3, Zeile 37 - Zeile 39 * * Spalte 4, Formel (I) * * Spalte 7, Zeile 9 - Zeile 11 * --- | 1,2,6-8 | |
| D,X | DE 33 21 289 A (DOW) 13. Dezember 1984 * Seite 3, Zeile 3 - Zeile 6 * * Seite 5, Zeile 30 - Seite 6, Zeile 30 * * Spalte 7, Zeile 24 - Zeile 31 * * Beispiel * --- | 1-3,6-8 | |
| A | EP 0 548 789 A (WACKER) 30. Juni 1993 * Seite 6, Zeile 55 - Zeile 56 * * Beispiel 1 * * Ansprüche 1,2 * ----- | 1-8 | RECHERCHIERTE SACHGEBIETE (Int.Cl.6) C08G C08L C09G |

Der vorliegende Recherchenbericht wurde für alle Patentansprüche erstellt

| Recherchenort | Abschlußdatum der Recherche | Prüfer |
|---|---|---|
| BERLIN | 3. Februar 1999 | Hoepfner, W |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
　　Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 11 5654

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-1999

| Im Recherchenbericht angeführtes Patentdokument | Datum der Veröffentlichung | Mitglied(er) der Patentfamilie | Datum der Veröffentlichung |
|---|---|---|---|
| US 5077421    A | 31-12-1991 | KEINE | |
| EP 659803    A | 28-06-1995 | DE    4344082 C<br>US    5486634 A | 22-12-1994<br>23-01-1996 |
| US 4699988    A | 13-10-1987 | US    4618689 A<br>CA    1274531 A<br>JP    62063594 A | 21-10-1986<br>25-09-1990<br>20-03-1987 |
| DE 3321289    A | 13-12-1984 | KEINE | |
| EP 548789    A | 30-06-1993 | DE    4142387 A<br>AT    119188 T<br>CA    2083088 A,C<br>DE    59201544 D<br>ES    2069369 T<br>JP    2513974 B<br>JP    5255642 A<br>MX    9207350 A<br>US    5261951 A | 24-06-1993<br>15-03-1995<br>21-06-1993<br>06-04-1995<br>01-05-1995<br>10-07-1996<br>05-10-1993<br>31-01-1994<br>16-11-1993 |

EPO FORM P0461

Für nähere Einzelheiten zu diesem Anhang : siehe Amtsblatt des Europäischen Patentamts, Nr. 12/82